# EUROPEAN PATENT SPECIFICATION

(11) **EP 0 544 669 B1**
(45) Date of publication and mention of the grant of the patent: **16.12.1998**
(21) Application number: 91906360.2
(22) Date of filing: 07.03.1991
(51) Int. Cl.: B32B 27/08, H02G 15/04, H02G 15/08, G02B 6/24, F16L 47/00, C09J 109/10

(54) **POLYMERIC PROTECTIVE ARTICLES AND ELECTRICAL, OPTICAL OR FLUID-CONDUIT APPARATUS INCORPORATING SUCH ARTICLES**
SCHUTZHÜLLEN AUS KUNSTSTOFF UND DIESE ENTHALTENDES ELEKTRISCHES OPTISCHES ODER MIT FLUID-LEITUNGEN AUSGESTATTETES GERÄT
OBJETS DE PROTECTION EN POLYMERE, ET APPAREILS ELECTRIQUES, OPTIQUES OU A CANALISATION DE FLUIDES INCORPORANT DE TELS OBJETS

(30) Priority: 09.03.1990 GB 9005374
(43) Date of publication of application: 09.06.1993
(73) Proprietor: RAYCHEM LIMITED, London, EC4A 1NF (GB)
(72) Inventor: PARK, George Barry, Purton, Swindon, Wiltshire SN5 9BP (GB); GANSBUEHLER, George Michael, John, Shaw, Swindon, Wiltshire SN5 9UN (GB); SENIOR, John Malcolm, Shaw, Swindon, Wiltshire SN5 9PL (GB); LEWINGTON, Sean Michael, Swindon, Wiltshire SN2 3AU (GB)
(74) Representative: Jay, Anthony William
(86) International application number: GB9100360
(87) International publication number: WO9113756

(56) References cited:
- EP-A- 0 322 168
- US-A- 3 467 563

## Description

This invention relates to polymeric protective articles and electrical, optical, or fluid-conduit apparatus incorporating such articles. for example dimensionally recoverable and/or voltage-protective and/or roll-on-tubular articles other than packaging films.

Dimensionally recoverable articles for use with cables and pipes are well known, for example tubing or the heat-recoverable articles described In U.S. Patents 3086242. and 3957382. and the clastomeric-recoverable articles described in British Patent 1440524. Voltage-protective articles for use with power cables may be insulators, for example as described in British Patents 1337951, 1337952, 1590723 or European Patent Application-EP-A-0125884; or may be conductive or semiconductive articles, for example stressgrading articles as described In British Patents 1470501. 1470502. 1470503 or 1470504. Roll-on-tubular articles are described. for example, in EP-B-0210807, and may take the form of a double-walled flexible tube with an internal lubricant between the walls to facilitate rolling onto a cable or other object to be covered. Electrical and optical cables, splices and terminations of such cables, and pipelines are examples of the kinds of apparatus for which the present invention may be of Interest. Electrical power cables and telecommunication cables are included, as well as optical fibre cables.

Such articles, especially heat-recoverable articles, have often been provided with coatings of hot-melt adhesive or solvent-based adhesive for various purposes, for example as described in EP-A-0322168. The present invention makes use of materials which are new to such articles.

The invention accordingly provides electrical, optical, or fluidconduit apparatus incorporating a protective article at least partly constructed of organic polymeric material (preferably cross-linked) carrying on at least part of the said organic polymeric material a coating of dried polymer latex (suspension or polymerisation) substantially free of particulate (or initially particulate) curing components which are capable of curing (or have cured) the coating, which coating is arranged so that at least part of the surface thereof remote from the underlying polymeric material is in adherent contact with another part of the article or with another part of the apparatus.

The apparatus may, for example, comprise an electrical or optical cable splice or termination or a harness of electrical wires or optical fibres; an electrical or optical cable or a pipe having a covering which comprises, or to which is adhered, the said protective article, for example when the said covering has been repaired by means of the said protective article in the form of a tape, sheet, or patch; or an electrical cable splice or termination or an electrical insulator for low, medium or high-voltage use.

The invention also relates to the protective articles themselves, which may be supplied separately or as part of a kit for assembly into such apparatus. In this connection it will be understood that the invention is concerned with articles other than packaging films, of which many coated or laminated varieties are known, for example in the food packaging industry. The articles according to this invention, preferably suitable for use as the protective article in the aforesaid apparatus, may be dimensionally recoverable (especially heat-recoverable) and/or voltage-protective and/or roll-on tubular articles at least partly constructed of organic polymeric material carrying on at least part of the organic polymeric material a coating of dried polymer latex (suspension or polymerisation) substantially free of any particulate mixture of two or more particulate curing components capable of curing the coating, which coating is arranged so that at least part of the surface thereof remote from the underlying polymeric material can be brought into contact with another part of the article or with another object so as to adhere the article to itself or the other object.

The invention also provides a tape or sheet article carrying the latex coating on at least part of each of its main surfaces so as to enable it to be wrapped around an object and secured by a latex-to-latex overlap joint, the latex coating preferably being carried on a heat-recoverable portion of the tape or sheet, and preferably being securable to another heat-recoverable portion. The article when so secured is also part of the invention.

Also included is a tape or sheet article carrying the dried latex coating at least on one of its main surfaces, which is suitable for use as an adherent wrapping or patch on a cable or pipe covering.

The articles may have numerous other uses for decorative or protective purposes, e.g. for prevention of corrosion at the base of street lighting posts.

The "latex" used to form the latex coating may be (a) a latex derived from forming the polymer in a solution of monomer in a liquid in which the polymer becomes insoluble as polymerisation proceeds; or may be (b) latex formed by polymerisation of droplets of monomer or monomer solution dispersed in a suitable liquid; or may be (c) a suspension derived from dispersion of pre-existing polymer into a liquid in which it is not significantly soluble. The suspension latex (c) usually tends to have larger dispersed particles than the polymerisation latexes (a) or (b), although the particle size ranges may overlap. Mixtures of suspension latex with polymerisation latex may produce useful materials, for example a mixture of polysulphide suspension latex with an acrylic polymerisation latex. It will be recognised that the term "latex" as used hereinafter may include the polymer suspensions as well as materials more traditionally regarded as "latex". Blends of latexes of the same type may also be useful, for example a styrene butadiene latex of high styrene content with one of low styrene content to alter the tack and modify the glass transition temperature. The liquid phase of the latex is usually water.

The use of dried latex coatings, especially as substantially non-curing adhesives, on the articles and apparatus in question is a new departure from the usual practice in this field, where hot-melt or solvent-based adhesives have traditionally been used, and the latex produces unexpected effects and advantages. For example, latex coatings can be found which do not flow significantly at temperatures below 140°C. but which allow recovery to occur without unacceptable wrinkling at temperatures of about 100°C, which is not usually possible with previously used hot melt adhesives. The latexes have been found to have unexpected resistance to the phenomenon known as "milk-off', where hot-melt-coated articles tend to slip off the end of an article such as a cable and onto which they are being recovered. Latex coatings can be applied thinly on heat-recoverable tubing or other articles without the problems associated with hot melts or solvent-based adhesives. Premature recovery of the heat-recoverable article may result from the application of hot melts, while solvents must be removed with precautions (often expensive) against environmental pollution.

The present substantially curing-agent-free dried latex coatings preferably contain zero % or substantially zero % by weight of the particulate curing components (more preferably of any curing components), although slightly higher levels such as less than 1%, or less than 5%, but always less than 10%, may be permissible for some materials in some circumstances and may therefore be included within the term "substantially free". These coatings are clearly to be distinguished from the curable particulate coatings described in EP-A-0281354, composed of separate particles of curable material and curing agent bound together by latex binder. preferably at binder levels up to 25% of the coating weight. The latex coatings according to the present invention, without any significant curing, can produce advantageous adhesive properties. However, the invention does not exclude the use of inherently curable latexes whose polymer backbone includes or has attached thereto components which react with one another to cure the coating when heated to a temperature above 50°C, preferably above 70°C. more preferably above 90°C.

For the present invention, it is preferred that the coating comprises a dried film-forming latex of a polymer having a glass transition temperature (Tg) below the temperature at which the latex was dried to form the coating. Preferably, Tg is below room temperature, more preferably below 0°C. especially below -20°C, or more especially below -30°C. Although natural rubber latex may be useful for some embodiments of the present invention, the coating will more usually comprise a dried synthetic polymer latex. Drying will normally be effected at temperatures above the minimum film-forming temperature of the latex.

Suitable latexes may be selected from polymerisation or suspension latexes of polymers selected from, for example, natural rubber, ethylene/vinyl acetate copolymers, butyl rubber, styrene/butadiene rubber, polyisobutylene, polychloroprene, polyethylene, ethylene/acrylic acid copolymers, polyvinyl chloride, polyvinylidene chloride, acrylic and methacrylic homo- and co-polymers, nitrile rubber, styrene/acrylic copolymers, silicones, fluoropolymers, e.g. homo- and co-polymers of vinylidene fluoride. Mixtures of latexes may also be used to suit end use requirements. For example, tacky and non-tacky latexes may be blended to produce a controlled degree of tack, e.g. butyl rubber latex and polyisobutylene latex.

"Tack" may be understood as the ability of a material to adhere to a surface on momentary contact, and tack may be increased by addition of one or more tackifiers, which may be natural or synthetic resins in the form of glassy solids with melt points from about 30°C to about 140°C, or in the form of liquids. Examples include coumarone-indene resins, wood resin, polyterpenes, phenol-formaldehyde resins.

Tack may be measured by coating the adhesives to be tested onto a polymeric substrate to form a dry film of about 2 millimetres thickness. A Stevens Texture Analyser is then used to test for the degree of tack at room temperature by pressing a cylindrical probe 1 millimetre into the coating and recording the force required to pull the probe free of the coating. The probe diameter is 13 millimetres and the probe movement speed is 0.2 mm/second.

Some examples of the tack of latex coatings measures in this way are expressed below in grammes force per square millimetre of probe surface:

| | |
|---|---|
| Texicryl 13-034 (TM) Styrene (35%)/butyl acrylate | 0 |
| Texicryl 13-044 (TM) Styrene (2%)/butyl acrylate | 7.5 |
| LL875 (TM) 2-ethyl hexyl acrylate from Wacker | 8.3 |
| EP5381 (TM) acrylic from Rohm & Haas | 7.7 |

The dried latex coating may have sufficient surface tack to adhere to itself at room temperature, or may be substantially non-tacky at room temperature and capable of adhering to itself when heated to a temperature above 40°C, preferably 50°C, and more preferably 60°C.

A preferred form of such non-tacky heat-activatable latex comprises a latex (e.g. prevulcanised latex based on low ammonia natural rubber latex concentrate) mixed with a tackifier resin (e.g. 50% solids aqueous dispersion of cycloaliphatic hydrocarbon resin. e.g. Escorez 5380 Trademark) using a non-ionic surfactant (e.g. Triton X- 100 Trademark). Applied and dried at temperatures below the tackifier melting temperature, the coating is not tacky. Inherently tacky latex coatings may be rendered tack-free by dusting with particles of such tackifiers. At the usual temperatures encountered under heat-recoverable articles during heat recovery (e.g. above 60° or even 100°C) the coating becomes and remains tacky, presumably due to melting of the tackifier particles which then tackify the rubber. The absence of high levels of hydrophilic surfactant, e.g. less than 1% preferably not more than 0.5% surfactant, based on the total solids, is preferred in aqueous latexes to produce water-resistant adhesive bonds to use.

The invention naturally includes an article which has been adhered by means of the said coating to the said other part of the article or to the said other object, including, but not limited to, those where adhesion is effected by the said coating contacting a dried latex film present on the said other part of the article or on the said other object, especially when the said latex film comprises the same dried latex as the said coating.

In the case of voltage-protective articles, by which is meant ability to operate at least under "low-voltage" stresses of up to 1000 volts, and possibly at "medium-voltage" (up to 50000 V), or "high-voltage" (above 50000 V), it has surprisingly been found that acrylic (e.g. acrylic or methacrylic) polymer or copolymer latex is a preferred choice. Notwithstanding the aforementioned moisture-sensitivity of many dried latexes, the dried acrylic latex has been found to perform well in voltage-protective environments, for example as an adhesive for laminating polymeric components of insulators. Voltage-protective articles at least partly constructed of, for example, silicone rubber polymer, EPDM or ethylene/vinyl acetate copolymer carrying the said coating are especially useful and these or other voltage-protective articles according to this invention may be heat-recoverable or not. An especially useful voltage-protective article according to this invention may be a tubular component for incorporation in a cable splice or termination, e.g. as a stress-grading or insulating layer. The ends of the tubular component may be coated with suitable (preferably acrylic) latex, e.g. Haloflex 202 (TM) vinyl acrylic copolymer latex from ICI, which will then act to provide an adherent water block to prevent water from penetrating or spreading between adjacent layers of the assembled splice or termination. It has been found that coating of quite short lengths of the components produces a water-blocking seal capable of resisting surprisingly high pressures of water attempting to enter between the layers. When the coated components (e.g. the aforementioned tubular components, or polymeric sheds for cable terminations, insulators, or surge arrestors) are heat-recoverable, the recovery temperatures experienced during installation can render suitable latex coatings tacky and effect the bonding as aforesaid. The suitability of any specific latex is readily determined by simple trial.

For heat-recoverable articles at least partly (preferably mainly) composed of polyolefinic material, the coating usefully comprises a vinyl acetate/ethylene copolymer latex, e.g. EV2 (TM) or, less preferably, LL865 (TM) from Wacker. Especially useful are vinyl acetate/ethylene/acrylate terpolymers, for example Vinnapas-Dispersion EAF60 (Trademark), available from Wacker; and vinyl acetate/ethylene copolymers such as Vinamul 3237 (Trademark), available from Vinamul Ltd, which is an example of the aforementioned inherently curable latexes.

Preferably in all cases the said latex before drying has an average polymer particle size within the range from 80 to 500 nm. It is also preferred that the said latex has an average molecular weight of at least 100 000 more, preferably at least 125 000, for example at least 150 000.

One especially useful form of the invention provides a wrap-around dimensionally-recoverable article wherein the said latex coating is capable of adhering the article to itself to secure it in its wrapped-around configuration. Surprisingly, the latex coating can produce a bond capable of withstanding heat recovery of the article even when the coating is carried on a heat-recoverable part of the article, and even when it is adhered to another heat-recoverable part of the article. Preferably a latex coating is present on both parts to produce a latex-to-latex (preferably the same latex) overlap bond.

Another especially useful form provides a hollow dimensionally-recoverable article having one or more openings to the exterior, and having the said latex coating on an interior surface at least at or near the said opening(s), e.g. a harnessing "boot" or "udder", heat-recoverable tubing, or a protective end cap for a power or telecommunication cable. It is especially advantageous for "boots" and "udders" to have different latexes at their respective larger and smaller openings, or to have a first latex coating at one or more openings and a coating of a second latex at at least one of those openings. A relatively thermoplastic or "hot-melt-like" latex, for example the aforementioned Vinamul 3237, at the both ends of a boot may produce better flow during installation, for example on an electrical cable harness, preferably producing a visible bead of the latex at the recovered smaller end, which can improve the resistance of the bond at that end to manual flexing of the harness (the so-called gorilla test). A relatively elastomeric latex, for example the aforementioned EAF60, further inside the smaller end of a boot may be found to improve the pull-out resistance in use, helping the boot to pass the V.G. static load test, for example. Static load tests at 105°C and 1 kg load may achieve desirably less than 5 mm pull-out after 4 hours using latex adhesives according to the present invention.

In all cases, the latex polymer preferably comprises at least 40%, usually at least 45% or 50%, by weight of the dried coating, and may constitute 70% or 80%, or even as much as or more than 90%, or possibly 95%, by weight of the dried latex coating. Coatings in which the latex polymer comprises more than 99%, or substantially all, of the dried solids have proved very useful, e.g. in the aforementioned voltage-protective applications. Various non-curing additives, for example antioxidants, pigments, tackifiers, thickeners or fillers, may be incorporated as part or all of the balance of the dried coating according to the requirements of specific end uses of the latex-coated articles. Additions of 1 to 15%, preferably 2 to 10%, e.g. about 5%, by weight of tackifier, for example Escorez ESC2192 (Trademark), may be advantageous for some purposes, for example for the aforementioned boots and udders.

The latex coatings may be applied and dried by known methods, for example dip coating, spraying, flood coating, spin coating, etc. followed by drying at ambient or elevated temperature (below any critical limits for the materials or articles in question, such as recovery temperature).

Specific embodiments of the invention will now be described by way of example. Shear and peel adhesion tests were conducted according to B.S.2782.

### Example 1

A slit tube of known heat-recoverable polyolefin-based material available from Raychem Limited under the Trademark "RNF 3000", which had been stretched at a temperature above the crystalline melting temperature of the polyolefin to a length three times its original length, was coated along its opposable edges with a vinyl acetate/ethylene copolymer latex (EV2 Trademark from Wacker), which was then allowed to dry.

The coated edges were then overlapped (latex-to-latex area of overlap 5 cm²) and pressed for one minute under a 1 kg weight, after which the shear strength of the overlap adhesive bond was found to be 145 N/625 mm², and the rolling drum peel strength was found to be 146 N/25 mm at 20°C and 25 N/25 mm at 80°C.

A tubular heat-shrinkable article, formed by similarly bonding such a sheet with the direction of stretch lying around the circumference of the tube, could be recovered around a cylindrical mandrel by heating to a temperature of about 150°C without breaking the overlap bond.

### Example 2

A heat-recoverable "udder" of known design available from Raychem Limited under the Trademark "-25", having a tubular body of relatively large diameter with one open end and with four tubular extensions of smaller diameter extending from its other end, was coated internally near each of its five orifices with the same latex as in Example 1. Alter dying, the latex coatings produced excellent adhesion between the udder and the surfaces of cable-enclosing tubes of polymer about which the udder was heat-recovered in known manner to produce a four-branched wiring harness.

### Example 3

A well-known high-voltage insulating material based on silicone rubber filled with iron oxide and alumina trihydrate (available from Raychem Limited under Trademark "HVTM") was adhered to itself by means of a dried coating of a blend of butyl rubber latex and polyisobutylene latex (1.24:0.76 parts by weight solids). The adhesive bond had a rolling drum peel strength of 69 N/25 mm at room temperature.

### Example 4

Example 3 was repeated using an acrylic polymer latex instead of the given blend, to produce a rolling drum peel strength of 30 N/25 mm, with excellent resistance of the bond to high voltage stress, when tested by the "British Rail" test as described hereinafter.

### Example 5

A roll-on sleeve 27 cm long available from Raychem Corporation under the Trademark "RAYVOLVE" was coated over a length of 8 cm at each end of its outer surface with an acrylic latex and the coating was allowed to dry at room temperature. The tacky latex-coated surface could be rolled into contact with an object onto which the article was being applied to provide an adhesive bond which tended automatically to limit any accidental rolling-off of the applied sleeve.

### Example 6

Latex coating formulations with fillers, tackifiers or other additives may be made using known mixing techniques with formulations along the following lines in which proportions are % based on dry coating weight.

### (a) Formula 2971-10-1

| | |
|---|---|
| ECR 504 (TM) Polyisobutylene latex from Exxon Chemicals. | 45.7 |
| BL 100 (TM) Butyl rubber latex from Revertex. | 28.0 |
| Bayferrox (TM) Iron oxide from Bayer. | 3.8 |
| UF35E (TM) Alumina trihydrate from Baco. | 22.5 |

### (b) Formula 3046-12-3

| | |
|---|---|
| Texicryl 13-044 (TM) Styrene (2%)/butyl acrylate latex from Scott Bader. | 99.25 |
| Colanyl red (TM) pigment from Hoechst | 0.5 |
| PUR2100 (TM) Polyurethane thickener from Berol Nobel. | 0.25 |

### (c) Formula 3046-17-2

| | |
|---|---|
| 13-044 (as in previous formula) | 80 |
| AFS (TM) Cyclohexanone/formaldehyde tackifier resin from Bayer | 20 |

### (d) Formula 2971-29-2

| | |
|---|---|
| Natural Rubber latex (low ammonia) concentrate from Industrial Latex Adhesives Ltd. | 50 |
| Escorez 5380 (TM) Cycloaliphatic tackifier resin from ESSO Chemicals Ltd. | 50 |

### (e) Formula 3046- 10-C

| | |
|---|---|
| 13-044 (see above) | 99 |
| GLIDD FE (TM) Polyethylene/PTFE-particle wax from Lanco. | 1 |

### (f) Formula 3046-10-E

| | |
|---|---|
| 13-044 (as above) | 99 |
| Dow 36 (TM) Silicone emulsion from Dow. | 1 |

### (g) Formula 3046-22-B

| | |
|---|---|
| 13-044 (as above) | 99 |
| BACOTE 20 (TM) Zirconium oxide solution from Magnesium Electron Ltd. | 1 |

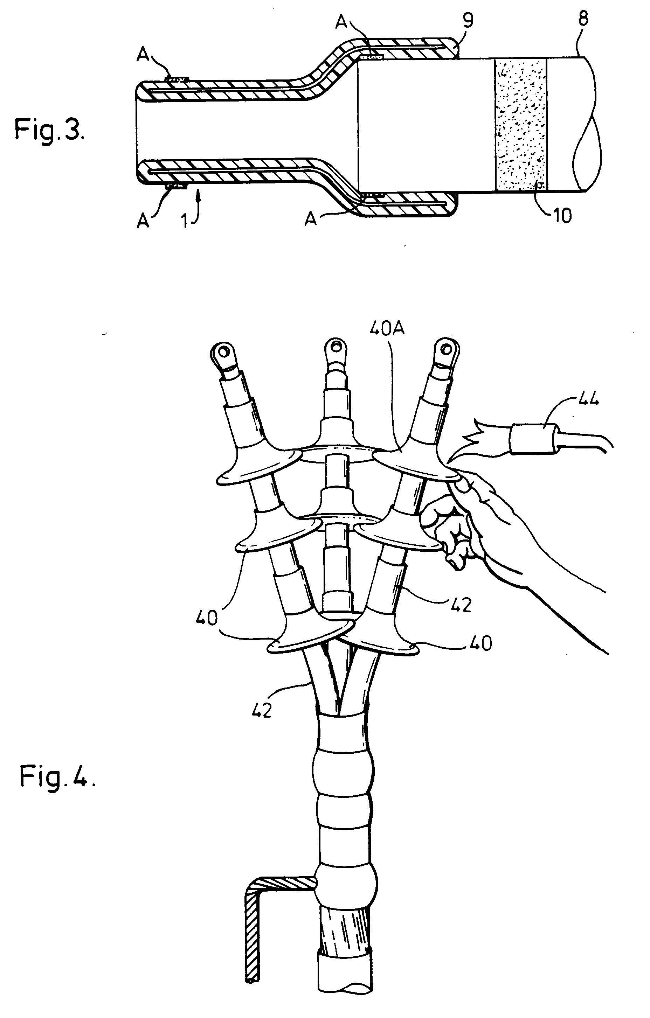

The indicated formulations were mixed by means of a low shear paddle stirrer and were applied to adhere a polymer shed to a cable termination (as illustrated in Figure 4 of the accompanying drawings hereinafter described), followed by the "British Rail" test (described by A Bradwell in I.E.E. Proc., Volume 131, Part B, No. 6. November 1984) in which the shedded termination is immersed in water which is cycled between temperatures of 23°C and 50°C three times in 24 hours, followed by measurement of electrical resistance across the adhesive bond, a resistance of at least 10¹⁰ ohms sustained for 100 hours being required to pass the test. The adhesives themselves were also subjected to the standard Tracking and Erosin Resistance Test of ASTM 2303.

### RESULTS:

| | BR TEST | ASTM 2302 |
|---|---|---|
| (a) | FAIL | FAIL |
| (b) | PASS | PASS |
| (c) | PASS | PASS |
| (d) | PASS | FAIL |
| (e) | PASS | PASS |
| (f) | PASS | PASS |
| (g) | | FAIL |

Examples of articles according to this invention are shown in the accompanying drawings.

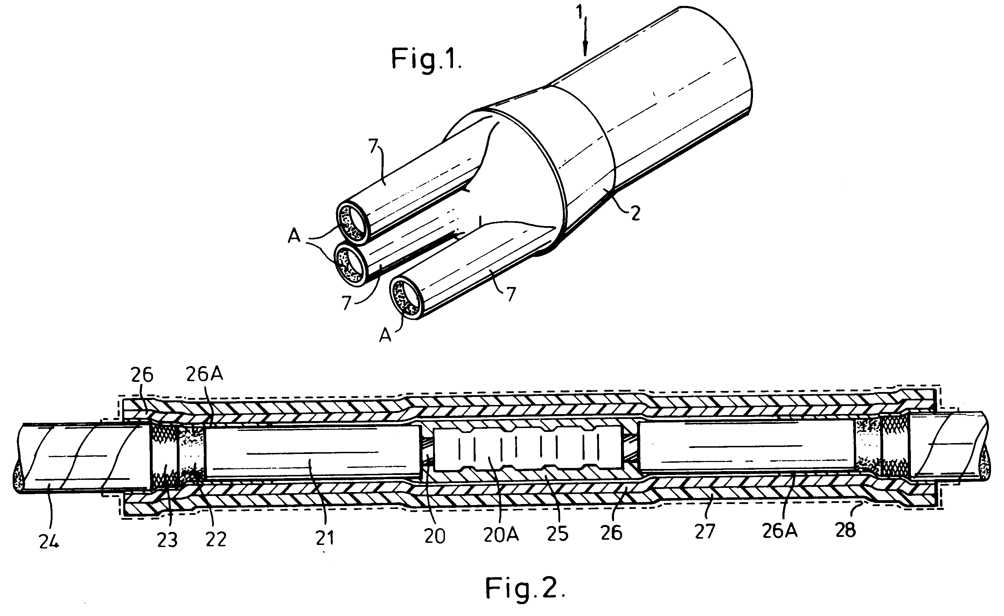

Figure 1 shows a heat-recoverable "udder" having a tubular plastics body 1 with a frusto-conial portion 2 and three outlets 7 in expanded, heat-recoverable state, which have been coated near their inner ends with a latex adhesive formulation A. The ends of the outlets 7 are dip-coated in the latex, followed by wiping of the latex off the outside surfaces and drying the residual inner coating at temperatures below the recovery temperature. The manufacture of the udder itself is described in our GB-A-2074931, and many other known forms of heat-recoverable "udders", "boots" and tubes having numbers of aperatures varying from one (end caps) to two (tubes - one at each end) to several may be similarly coated with latex adhesives on their inner and/or outer surfaces. On heat-recovery about another object e.g. the branches of a cable harness, the adhesive coating seals the recovered article to the object.

Referring to Figure 2, a 15 kV splice between two 15 kV polyethylene cables each comprising a 50 mm² copper conductor 20, polyethylene dielectric 21, graphite layer 22, graphite-impregnated cloth layer 23, metal screen 24 and plastics outer jacket (not shown). The central copper conductors 20 are connected together by crimp 20A and the screen 24 is cut back from the end of the dielectric for a distance ranging from 9 to 15 cm to expose the graphite impregnated cloth layer 23. The cloth layer is cut back 2 cm from the screen and the graphite layer extending beyond 1 cm from the cloth layer is removed. A quantity of epihalohydrin stress-grading material 25 as described in British Patent No. 1604612 is applied over the crimp and exposed conductors, and a piece of Raychem stress-grading tubing 26 is recovered over the splice so that is conforms to the contours of the splice and overlaps the cable screen 24 at each end.

When the outer jacket (not shown) of such cables is damaged, it may become possible for water to enter and to flow along inside the cable. Quite high water pressures may develop, and entry of the water into the space (exaggerated for clarity) between the stress-grading layer 26 and the underlying cable components can cause electrical failure within the splice. A dried acrylic latex adhesive coating 26A, dip-coated on the inner end surfaces of the stress-grading tube 26, adheres to the underlying components on heat-recovery of the tube 26 and forms a surprisingly effective water-blocking seal.

Raychem BBIT insulation tubing 27 of recovered wall thickness 4 mm having a volume resistivity of at least 10¹³ ohm cm and a length equal to that of the stress-grading tubing 26 is then recovered over the stress-grading layer, followed in known manner by (i) a piece of Raychem CES dual extrusion tubing (not shown) comprising an inner insulating layer of wall thickness about 3 mm and an outer conductive polymer layer of wall thickness about 0.7 mm, (ii) a braided copper screen 28, and (iii) an outer heat-recoverable casing, for example as described in British Patent 2111769.

Figure 3 shows a roll-on tubular article 9 of the kind available from Raychem Corporation under the Trademark "RAYVOLVE", as described in our EP-A-0210807, in the process of being rolled on to an object 8. Dried latex adhesive coatings A, originally on the inner end surfaces of the tubular article, will form seals at the respective ends when the article 9 has been fully rolled on to object 8. The object 8 may also carry adhesive or sealant, as indicated at 10, to assist in sealing. Pressure-sensitive latex adhesives may be useful if the roll-on article 9 is to be positioned at the end of object 8, whereas heat-activatable latex coatings may be preferable if the article 9 is to be rolled further along the object 8.

Figure 4 shows a cable termination having Raychem heat-recoverable sheds 40 shrunk onto Raychem HVTM insulation tubing 42 in known manner. One of the sheds 40A is shown in the process of being shrunk by means of flame gun 44. A coating (not visible) of dried vinyl/acrylic latex on the inside surface of the sheds 40 adheres them to the tubing 42.

## Claims

1. Electrical, optical, or fluid-conduit apparatus incorporating a dimensionally-recoverable and/or voltage-protective article at least partly constructed of organic polymeric material (preferably cross-linked) carrying on at least part of the said organic polymeric material a coating of polymer latex applied as latex and dried in situ thereon, the latex being derived from dispersing the polymer into a liquid or being derived from polymerizing monomers which are dissolved or dispersed in a liquid, the coating containing less than 10% by weight of particulate (or initially particulate) curing components which are capable of curing (or have cured) the coating, which coating is arranged so that at least part of the surface thereof remote from the underlying polymeric material is in adherent contact with another part of the article or with another part of the apparatus.

2. Apparatus according to claim 1, comprising an electrical or optical cable splice or termination, or a harness of electrical wires or optical fibres.

3. Apparatus according to claim 1, comprising an electrical or optical cable or a pipe having a covering which comprises, or to which is adhered, the said protective article.

4. Apparatus according to claim 3, wherein the said covering has been repaired by means of the said protective article in the form of a tape, sheet, or patch.

5. Apparatus according to claim 1, comprising an electrical insulator for low, medium or high-voltage use.

6. Apparatus according to claim 1, wherein the coating is carried on a heat-recoverable part of the article.

7. Apparatus according to claim 6, wherein the article is a sheet or tape which has been wrapped around an object, and the coating adheres the said part of the article to another heat-recoverable part of the article in an overlap joint.

8. An article other than a packaging film for use as the said article in apparatus according to any of claims 1 to 7, (A) which article is at least partly constructed of dimensionally-heat-recoverable organic polymeric material carrying on at least part of the heat-recoverable organic polymeric material the said coating, or (B) which article is a voltage-protective article, preferably a tubular component or a polymeric shed, at least partly constructed of organic polymeric material and carrying on at least part of the organic polymeric material the said coating, which coating in (A) or (B) contains less than 10% by weight of particulate (or initially particulate) curing components which are capable of curing (or have cured) the coating and which coating is applied as latex and dried in situ thereon and is arranged so that at least part of the surface thereof remote from the underlying polymeric material can be brought into contact with another part of the article or with another object so as to adhere the article to itself or the other object, or (C) which article is a roll-on tubular article at least partly constructed of organic polymeric material carrying on at least part of the organic polymeric material the said coating which coating contains less than 10% by weight of particulate (or initially particulate) curing components which are capable of curing (or have cured) the coating and which coating is arranged so that at least part of the surface thereof remote from the underlying polymeric material can be brought into contact with another object by rolling the article onto the other object so as to adhere the article to the other object.

9. An article according to part (B) of claim 8. wherein the latex coating is carried on a heat-recoverable part of the article.

10. An article according to claim 8 or 9, wherein the said heat-recoverable part is capable of being adhered by the latex coating to another heat-recoverable part of the article.

11. An article according to any of claims 8 to 10, wherein the coating is substantially non-tacky at room temperature and will not significantly adhere to itself until heated to a temperature above 40°C, preferably above 50°C, more preferably above 60°C.

12. An article according to claim 11 and 15, wherein the coating incorporates or has a surface coating of, particles of tackifier material which melt and tackify the latex coating when heated to the said temperature.

13. An article according to any of claims 8 to 12, which has been adhered by means of the said coating to the said other part of the article or to the said other object, the adhesion being effected by the said coating contacting a dried latex film present on the said other part or other object, preferably wherein the said latex film comprises the same dried latex as the said coating.

14. Apparatus according to claim 5 or a voltage-protective article according to claim 8 (B) or any claim dependent thereon, wherein the said coating comprises an acrylic latex, preferably a styrene (2%)/butyl acrylate latex.

15. An article or apparatus according to claim 14, at least partly constructed of silicone rubber polymer, EPDM, or ethylene/vinyl acetate copolymer carrying the said coating.

16. A dimensionally-recoverable article according to claim 8 or any claim dependent thereon which is hollow and having one or more openings to the exterior, and having the said latex coating on an interior surface at least at or near the said opening(s).

17. An article according to claim 16 in the form of a boot or udder having a coating of a first latex at one or more openings and a coating of a second latex at at least one of those openings.

18. An article according to claim 17, wherein the second latex is relatively elastomeric and the first latex is so positioned and is sufficiently thermoplastic to produce a visible bead of the latex on recovery of the article onto an object.

19. An article or apparatus according to any of the preceding claims, wherein the latex coating is substantially non-curing.

20. An article or apparatus according to any of claims 1 to 18 wherein the latex polymer backbone includes or has attached thereto components which react with one another to cure the coating on heating to a temperature above 50°C.

## Patentansprüche

1. Elektrische, optische oder Fluid-Leitungsvorrichtung mit einer Schutzhülle mit rückbildbarer Dimension und/oder als Spannungsschutz, der zumindest teilweise aus einem organischen Polymermaterial (vorzugsweise vernetzt) besteht, das an mindestens einem Teil des organischen Polymermaterials eine Beschichtung aus Polymerlatex aufweist, der als Latex appliziert und in situ darauf getrocknet ist, wobei der Latex durch Dispersion des Polymers in einer Flüssigkeit oder durch Polymerisieren von Monomeren, die in einer Flüssigkeit gelöst oder dispergiert sind, abgeleitet ist, und die Beschichtung weniger als 10 Gew.-% von teilchenförmigen (oder anfangs teilchenförmigen) Vernetzungskomponenten enthält, die dazu fähig sind, die Beschichtung zu härten (oder diese gehärtet haben), wobei die Beschichtung so angeordnet ist, daß mindestens ein Teil ihrer von dem darunter liegenden Polymermaterial entfernten Oberfläche in einem Haftkontakt mit einem anderen Teil der Schutzhülle oder mit einem anderen Teil der Vorrichtung steht.

2. Vorrichtung nach Anspruch 1, dadurch gekennzeichnet, daß sie sich aus einer elektrischen oder optischen Kabelspleißung oder einem Ende, oder einem Kabelsatz elektrischer Leiter oder optischer Fasern, zusammensetzt.

3. Vorrichtung nach Anspruch 1, dadurch gekennzeichnet, daß sie sich aus einem elektrischen oder optischen Kabel oder Rohrkabel mit einer Umhüllung zusammensetzt, die die Schutzhülle enthält, oder an der die Schutzhülle haftet.

4. Vorrichtung nach Anspruch 3, dadurch gekennzeichnet, daß die Umhüllung mittels der Schutzhülle in Form eines Bandes, einer Folie oder eines Flickens repariert wurde.

5. Vorrichtung nach Anspruch 1, dadurch gekennzeichnet, daß sie sich aus einem elektrischen Isolator für niedrige, mittlere oder hohe Spannung zusammensetzt.

6. Vorrichtung nach Anspruch 1, dadurch gekennzeichnet, daß sich die Beschichtung auf einem Wärme-rückbildbaren Teil der Schutzhülle befindet.

7. Vorrichtung nach Anspruch 6, dadurch gekennzeichnet, daß die Schutzhülle eine Folie oder ein Band ist, die um ein Objekt gewickelt sind, und die Beschichtung den Teil der Schutzhülle an einen anderen Wärme-rückbildbaren Teil der Schutzhulle in einer überlappenden Verbindung anklebt.

8. Eine von einem Verpackungsfilm verschiedene Schutzhülle zur Verwendung in einer Vorrichtung nach einem der Ansprüche 1 bis 7, dadurch gekennzeichnet, daß (A) die Schutzhülle zumindest teilweise aus einem organischen Polymermaterial mit Wärme-rückbildbarer Dimension besteht, das auf mindestens einem Teil des Wärme-rückbildbaren organischen Polymermaterials die Beschichtung aufweist, oder (B) die Schutzhülle eine Schutzhülle gegen Spannung ist, vorzugsweise eine röhrenförmige Komponente oder eine Polymer-Abdeckung, die zumindest teilweise aus einem organischen Polymermaterial besteht und auf mindestens einem Teil des organischen Polymermaterials die Beschichtung aufweist, wobei die Beschichtung in (A) oder (B) weniger als 10 Gew.-% an teilchenförmigen (oder anfangs teilchenförmigen) Härtungskomponenten enthält, die zur Härtung der Beschichtung fähig sind (oder die Beschichtung gehärtet haben), wobei die Beschichtung als Latex aufgetragen und in situ darauf getrocknet wird, und so angeordnet ist, daß mindestens ein Teil ihrer vom darunterliegenden Polymermaterial entfernten Oberfläche in Kontakt mit einem anderen Teil der Schutzhülle oder mit einem anderen Objekt gebracht werden kann, um die Schutzhülle an sich selbst oder an das andere Objekt anzukleben, oder (C) die Schutzhülle eine Roll-on-Blasfolie ist, die zumindest teilweise aus organischem Polymermaterial besteht, das an mindestens einem Teil des organischen Polymermaterials die Beschichtung aufweist, wobei die Beschichtung weniger als 10 Gew.-% teilchenförmiger (oder anfänglich teilchenförmiger) Härtungskomponenten enthält, die dazu fähig sind, die Beschichtung zu härten (oder sie gehärtet haben), und die Beschichtung so angeordnet ist, daß zumindest ein Teil ihrer von dem darunterliegenden Polymermaterial entfernten Oberfläche in Kontakt mit einem anderen Objekt gebracht werden kann, indem man die Schutzhülle auf das andere Objekt aufrollt, um die Schutzhüile an das andere Objekt anzukleben.

9. Schutzhülle nach Teil (B) von Anspruch 8, dadurch gekennzeichnet, daß sich die Latexbeschichtung auf einem Wärme-rückbildbaren Teil der Schutzhülle befindet.

10. Schutzhülle nach Anspruch 8 oder 9, dadurch gekennzeichnet, daß der Wärme-rückbildbare Teil dazu fähig ist, durch die Latexbeschichtung an einem anderen Wärmerückbildbaren Teil der Schutzhülle anzuhaften.

11. Schutzhülle nach einem der Ansprüche 8 bis 10, dadurch gekennzeichnet, daß die Beschichtung bei Raumtemperatur im wesentlichen nicht klebrig ist, und im wesentlichen nicht an ihr selbst anhaftet, solange sie nicht auf eine Temperatur von oberhalb 40 °C, vorzugsweise oberhalb 50 °C und insbesondere oberhalb 60 °C erhitzt wird.

12. Schutzhülle nach Anspruch 11 und 15, dadurch gekennzeichnet, daß die Beschichtung Teilchen eines Klebematerials enthält oder eine Oberflächenbeschichtung davon aufweist, die beim Erhitzen auf die angegebene Temperatur schmelzen und die Latexbeschichtung klebrig machen.

13. Schutzhülle nach einem der Ansprüche 8 bis 12, dadurch gekennzeichnet, daß sie mit Hilfe der Beschichtung auf dem anderen Teil der Schutzhülle oder dem anderen Objekt anhaftet, und die Haftung durch Kontakt der Beschichtung mit einem trockenen Latexfilm, der auf dem anderen Teil oder anderen Objekt vorhanden ist, bewirkt wird, wobei der Latexfilm vorzugsweise den gleichen getrockneten Latex wie die Beschichtung umfaßt.

14. Vorrichtung nach Anspruch 5 oder Spannungsschutzhülle nach Anspruch 8 (B) oder einem davon abhängigen Anspruch, dadurch gekennzeichnet, daß die Beschichtung einen Acryllatex, vorzugsweise einen Styrol (2 %)/Butylacrylat-Latex, umfaßt.

15. Schutzhülle oder Vorrichtung nach Anspruch 14, dadurch gekennzeichnet, daß sie zumindest teilweise aus einem Siliconkautschukpolymer, EPDM oder Ethylen/Vinylacetat-Copolymer, die die Beschichtung aufweisen, bestehen.

16. Schutzhülle mit rückbildbarer Dimension nach Anspruch 8 oder einem davon abhängigen Anspruch, dadurch gekennzeichnet, daß sie hohl ist und eine oder mehrere Öffnungen nach außen aufweist, und sich die Latexbeschichtung auf einer inneren Oberfläche an mindestens den oder nahe den Öffnungen befindet.

17. Schutzhülle nach Anspruch 16, dadurch gekennzeichnet, daß sie die Form eines Stiefels oder Euters besitzt und eine Beschichtung eines ersten Latex an einer oder mehreren Öffnungen und eine Beschichtung eines zweiten Latex an mindestens einer dieser Öffnungen aufweist.

18. Schutzhülle nach Anspruch 17, dadurch gekennzeichnet, daß der zweite Latex relativ elastomer ist und der erste Latex so angebracht und ausreichend thermoplastisch ist, daß er bei der Rückbildung der Schutzhülle auf einem Objekt einen sichtbaren Latexwulst ausbildet.

19. Schutzhülle oder Vorrichtung nach einem der vorhergehenden Ansprüche, dadurch gekennzeichnet, daß die Latexbeschichtung im wesentlichen nicht härtbar ist.

20. Schutzhülle oder Vorrichtung nach einem der Ansprüche 1 bis 18, dadurch gekennzeichnet, daß das Grundgerüst des Latexpolymers Komponenten enthält oder daran angebracht aufweist, die miteinander reagieren, um die Beschichtung beim Erhitzen auf eine Temperatur von oberhalb 50 °C zu härten.

## Revendications

1. Appareil électrique, optique ou à conduit de fluide incorporant un article doué de reprise dimensionnelle et/ou protégeant contre les tensions, constitué au moins partiellement d'une matière polymérique organique (avantageusement réticulée), portant sur au moins une partie de ladite matière polymérique organique, un revêtement de latex polymère appliqué sous forme de latex et séché in situ sur elle, le latex étant dérivé d'une dispersion de polymère dans un liquide ou étant dérivé d'une polymérisation de monomères qui sont dissous ou dispersés dans un liquide, le revêtement contenant moins de 10 % en poids de constituants de durcissement en particules (ou initialement en particules) qui sont capables de durcir (ou ont durci) le revêtement, lequel revêtement est agencé de manière qu'au moins une partie de sa surface éloignée de la matière polymérique sous-jacente soit en contact adhérant avec une autre partie de l'article ou avec une autre partie de l'appareil.

2. Appareil selon la revendication 1, comportant une épissure ou terminaison de câble électrique ou optique, ou un faisceau de fils électriques ou de fibres optiques.

3. Appareil selon la revendication 1, comportant un câble électrique ou optique ou une canalisation ayant une gaine qui comporte, ou à laquelle est collé, ledit article de protection.

4. Appareil selon la revendication 3, dans lequel ladite gaine a été réparée au moyen dudit article de protection sous la forme d'un ruban, d'une feuille ou d'une pièce.

5. Appareil selon la revendication 1, comportant un isolateur électrique pour une utilisation sous basse, moyenne ou haute tension.

6. Appareil selon la revendication 1, dans lequel le revêtement est porté sur une partie douée de reprise de forme à chaud de l'article.

7. Appareil selon la revendication 6, dans lequel l'article est une feuille ou un ruban qui a été enroulé autour d'un objet, et le revêtement fait adhérer ladite partie de l'article à une autre partie douée de reprise de forme à chaud de l'article dans un joint à recouvrement.

8. Article autre qu'un film d'emballage à utiliser en tant que ledit article dans l'appareil selon l'une quelconque des revendications 1 à 7, (A) lequel article est constitué au moins partiellement d'une matière polymérique organique douée de reprise dimensionnelle à chaud, portant, sur au moins une partie de la matière polymérique organique douée de reprise de forme à chaud, ledit revêtement, ou (B) lequel article est un article de protection contre une tension, avantageusement un constituant tubulaire ou une cloche polymérique, constitué au moins partiellement d'une matière polymérique organique et portant, sur au moins une partie de la matière polymérique organique, ledit revêtement, lequel revêtement dans (A) ou (B) contient moins de 10 % en poids de constituants de durcissement en particules (ou initialement en particules) qui sont capables de durcir (ou ont durci) le revêtement, et lequel revêtement est appliqué en tant que latex et séché in situ sur elle, et est agencé de manière qu'au moins une partie de sa surface éloignée de la matière polymérique sous-jacente puisse être amenée en contact avec une autre partie de l'article ou avec un autre objet afin de faire adhérer l'article à lui-même ou à l'autre objet, ou (C) lequel article est un article tubulaire à rouler constitué au moins partiellement d'une matière polymérique organique portant, sur au moins une partie de la matière polymérique organique, ledit revêtement, lequel revêtement contient moins de 10 % en poids de constituants de durcissement en particules (ou initialement en particules) qui sont capables de durcir (ou ont durci) le revêtement, et lequel revêtement est agencé de manière qu'au moins une partie de sa surface éloignée de la matière polymérique sous-jacente puisse être amenée en contact avec un autre objet par roulage de l'article sur l'autre objet afin de faire adhérer l'article à l'autre objet.

9. Article selon la partie (B) de la revendication 8, dans lequel le revêtement de latex est porté sur une partie douée de reprise de forme à chaud de l'article.

10. Article selon la revendication 8 ou 9, dans lequel ladite partie douée de reprise de forme à chaud peut être collée par le revêtement de latex à une autre partie douée de reprise de forme à chaud de l'article.

11. Article selon l'une quelconque des revendications 8 à 10, dans lequel le revêtement est sensiblement non collant à la température ambiante et n'adhère pas notablement à lui-même jusqu'à ce qu'il soit chauffé à une température supérieure à 40°C, avantageusement supérieure à 50°C, plus avantageusement supérieure à 60°C.

12. Article selon les revendications 11 et 15, dans lequel le revêtement renferme des, ou comporte un revêtement de surface de, particules d'une matière d'adhésivité qui fondent et rendent collant le revêtement de latex lorsqu'il est chauffé à ladite température.

13. Article selon l'une quelconque des revendications 8 à 12, qui a été collé au moyen dudit revêtement sur ladite autre partie de l'article ou sur ledit autre objet, l'adhésion étant réalisée par la mise en contact dudit revêtement avec un film de latex séché présent sur ladite autre partie ou ledit autre objet, avantageusement dans lequel ledit film de latex comprend le même latex séché que ledit revêtement.

14. Appareil selon la revendication 5 ou un article de protection contre une tension selon la revendication 8 (B) ou l'une quelconque des revendications qui en dépendent, dans lequel ledit revêtement comprend un latex acrylique, avantageusement un latex de styrène (2 %)/acrylate de butyle.

15. Article ou appareil selon la revendication 14, constitué au moins partiellement d'un polymère de caoutchouc siliconé, d'EPDM, ou d'un copolymère éthylène/acétate de vinyle portant ledit revêtement.

16. Article doué de reprise dimensionnelle selon la revendication 8 ou l'une quelconque des revendications qui en dépendent, lequel est creux et présente une ou plusieurs ouvertures vers l'extérieur, et ayant ledit revêtement de latex sur une surface intérieure au moins à ladite ou auxdites ouvertures ou à proximité de ladite ou desdites ouvertures.

17. Article selon la revendication 16, sous la forme d'un soufflet ou d'une tétine ayant un revêtement d'un premier latex à une ou plusieurs ouvertures et un revêtement d'un second latex à au moins l'une de ces ouvertures.

18. Article selon la revendication 17, dans lequel le second latex est relativement élastomérique et le premier latex est positionné et est suffisamment thermopastique pour produire un bourrelet visible du latex lors de l'application de la reprise de forme de l'article sur un objet.

19. Article ou appareil selon l'une quelconque des revendications précédentes, dans lequel le revêtement de latex est sensiblement non durcissant.

20. Article ou appareil selon l'une quelconque des revendications 1 à 18, dans lequel le squelette du polymère de latex comprend, ou comporte, attachés à celui-ci, des constituants qui réagissent entre eux pour faire durcir le revêtement lors d'un chauffage à une température supérieure à 50°C.
